Europäisches Patentamt

European Patent Office

Office européen des brevets

(19)

(11) Numéro de publication: **0 012 652**
**B1**

(12) **FASCICULE DE BREVET EUROPEEN**

(45) Date de publication du fascicule du brevet: **07.07.82**

(21) Numéro de dépôt: **79400923.3**

(22) Date de dépôt: **27.11.79**

(51) Int. Cl.³: **C 09 J 5/00,** C 09 J 3/14,
B 32 B 17/10, C 03 C 27/06

(54) **Procédé de collage de deux éléments au moyen d'une substance photopolymérisable et dispositifs comprenant deux éléments réunis par une couche intermédiaire photopolymérisable.**

(30) Priorité: **15.12.78 FR 7835385**

(43) Date de publication de la demande:
**25.06.80 Bulletin 80/13**

(45) Mention de la délivrance du brevet:
**07.07.82 Bulletin 82/27**

(84) Etats contractants désignés:
**DE FR GB IT NL SE**

(56) Documents cités:
CH - A - 560 594
DE - A - 2 414 614
FR - A - 2 001 985
FR - A - 2 281 968
FR - A - 2 281 969
FR - A - 2 311 077

(73) Titulaire: **THOMSON-CSF**
**173, Boulevard Haussmann**
**F-75360 Paris Cedex 08 (FR)**

(72) Inventeur: **Dubois, Jean-Claude**
**"THOMSON-CSF" - SCPI 173, bld Haussmann**
**F-75360 Paris Cedex 08 (FR)**
Inventeur: **Eranian, Armand**
**"THOMSON-CSF" - SCPI 173, bld Haussmann**
**F-75360 Paris Cedex 08 (FR)**
Inventeur: **Paimblant, Paul**
**"THOMSON-CSF" - SCPI 173, bld Haussmann**
**F-75360 Paris Cedex 08 (FR)**

(74) Mandataire: **Wang, Pierre et al,**
**THOMSON-CSF SCPI 173, Bld Haussmann**
**F-75360 Paris Cedex 08 (FR)**

Courier Press, Leamington Spa, England.

**Procédé de collage de deux éléments au moyen d'une substance photopolymérisable et dispositifs comprenant deux éléments réunis par une couche intermédiaire photopolymérisable**

L'invention concerne un procédé de collage de deux éléments, dont l'un au moins peut laisser une fraction d'un rayonnement ultra-violet auquel il est exposé, notamment des plaques en verre et en matière plastique.

Dans de nombreuses réalisations industrielles on utilise des dispositifs transparents à structure feuilletée qui offrent une grande résistance aux chocs thermiques, mécaniques... De tels dispositifs sont formés de deux feuilles transparentes que l'on accole au moyen d'une colle. Une face de l'une des feuilles est recouverte d'un produit comprenant un solvant. L'autre feuille est appliquée ensuite. Un chauffage approprié permet, en éliminant le solvant, le durcissement du produit. Un type de produit particulièrement utilisé est une solution composée de polyvinylbutyral, d'un plastifiant (comme l'acétate de triglycol-diéthyle dans la proportion de 30%) et d'un solvant (comme un alcool aliphatique ou un ester). On utilise une telle composition notamment dans les pare-brise en verre feuilleté: deux plaques de verre épousant la forme désirée sont réunies par une telle colle, et dans certains blindages: on réunit alors une plaque de verre et une plaque de plastique. Les procédés de collage utilisant ce type de colle nécessitent une source d'énergie assurant un chauffage dont la durée est souvent assez longue. D'autre part, le durcissement peut difficilement être parfait sur toute la surface du support et des traces de solvant peuvent subsister, ce qui nuit à la solidité puisque la colle n'est pas suffisamment durcie. Dans le cas où l'on utilise des feuilles de plastique, ces résidus de solvant attaquent le plastique et la solidité en est encore diminuée.

Plusieurs solutions sont déjà connues, qui ne nécessitent pas un chauffage d'une durée excessive ou un solvant dont l'élimination est aléatoire. Certaines, comme par exemple celle décrite dans le document allemand DE—A—2 414 614, utilisent un matériau éthylénique photo-polymérisable, composé d'un ou plusieurs monomères, mélangé à un ou plusieurs prépolymères, pour donner de la viscosité à la colle, et à un photoinitiateur. Dans le document FR—A—2 311 077, l'adhésif photopolymérisable contient un polymère halogéné dont la chaîne est interrompue par au moins un atome d'oxygène ou d'azote, en mélange avec deux monomères halogénés différents, et un agent photoinitiateur. Enfin, une autre solution apportée par le document FR—A—2 001 985 consiste en un mélange d'un polyester insaturé avec un monomère éthylénique copolymérisable avec le polyester, sous l'action d'un initiateur de photopolymérisation.

L'invention vise à remédier aux inconvénients cités et a pour objet un procédé de collage utilisant une composition photopolymérisable, suffisamment fluide pour pouvoir être étalée sur une face de l'un des supports, mais ne comportant pas de solvant, et capable de durcir rapidement et complètement sous l'effet d'un rayonnement ultraviolet. La polymérisation rend la composition très dure et adhérant parfaitement aux deux faces accolées. Elle comprend un mélange de monomères et de polymères réactifs solubles dans les monomères, la formule chimique de l'un au moins des composants comportant un cycle thi-irane. Ce procédé supprime le problème de l'élimination du solvant et les inconvénients qui en résultent. L'utilisation d'une colle durcie au moyen d'un rayonnement nécessite que l'un des deux éléments à accoler puisse laisser passer une fraction de ce rayonnement, ce qui est le cas dans les deux applications citées. L'illumination peut alors être effectuée à travers l'un et/ou l'autre des deux éléments et il n'y a pas de conditions d'environnement particulières. On obtient une économie d'énergie appréciable car le chauffage long est supprimé et l'énergie requise est celle d'une source ultra-violette de puissance moyenne fonctionnant de quelques secondes à quelques minutes. Les problèmes d'attaque chimique par le solvant de la feuille de plastique, dans le cas de feuilleté plastique-plastique ou plastique-verre ne se posent plus puisqu'il n'y a pas de solvant. Dans le cas où les éléments à accoler ne sont pas de même nature, l'invention prévoit, pour augmenter l'adhérence, d'effectuer préalablement au dépôt de la composition photopolymérisable, une application sur l'une des deux feuilles d'une couche dont la nature rend compatibles à la fois la composition photopolymérisable et celle des deux faces en vis-à-vis qui est la moins adhérente.

L'invention a pour objet un procédé de collage de deux éléments dont l'un au moins est perméable aux rayon-rayonnements ultra-violets, utilisant une substance photopolymérisable ne contenant aucun solvant, déposée en couche entre les deux éléments et insolée à travers l'élément perméable par un rayonnement ultraviolet, cette substance photopolymérisable étant formée d'un mélange d'au moins trois groupes de composants:

— un premier groupe comprenant au moins un monomère vinylique de fonctionnalité supérieure ou égale à 2 et de masse moléculaire inférieure à 500 grammes;

— un deuxième groupe comprenant au moins un polymère réactif soluble dans le monomère; ce polymère comportant au moins une double liaison ou un cycle et étant polymérisable sous l'effet du rayonnement ultraviolet;

— un troisième groupe comprenant au moins un catalyseur photosensible dont la proportion par rapport à la masse totale est comprise entre 1% et 5%; ce procédé étant caractérisé en ce que l'un au moins des premier et second groupes comprend un composant possédant un cycle thi-irane.

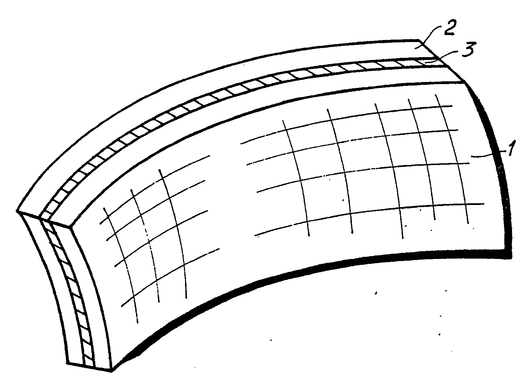

L'invention sera mieux comprise et d'autres caractéristiques apparaîtront au moyen de la description qui suit, fournissant notamment deux exemples d'application, non limitatifs, de l'invention et se référant à la figure unique annexée.

La composition photopolymérisable suivant l'invention comprend un monomère ou un mélange de monomères, un polymère ou un mélange de polymères réactifs, c'est-à-dire polymérisables sous l'effet d'un rayonnement, et un catalyseur photosensible. Lorsque ce mélange est exposé à un rayonnement ultraviolet, les molécules constituant le catalyseur sont excitées. Elles peuvent alors se dissocier en générant des radicaux qui vont initier une réaction de polymérisation des monomères et des polymères réactifs, cette réaction se propageant ensuite d'elle-même. Selon un processus différent, les molécules excitées du catalyseur peuvent transférer leur énergie d'excitation aux monomères qui, en retour, libèrent des radicaux initiant la réaction de polymérisation. La polymérisation peut aussi être initiée grâce à la présence d'un donneur d'atomes d'hydrogène qui se combinent avec les molécules du catalyseur excité et libèrent du donneur un radical. Le choix des composants du mélange utilisable pour le collage de deux surfaces est guidé, outre par la présence d'entités polymérisables par le rayonnement ultraviolet, par une exigence de fluidité. En effet, la composition doit pouvoir être étalée sur l'une des surfaces à accoler mais tout solvant est prohibé. Le choix est donc orienté vers des substances de masse moléculaire assez faible.

Selon l'invention, on utilise une composition comprenant au moins les composants suivants:

— un monomère vinylique ou un mélange de monomères vinyliques de masse moléculaire basse, généralement inférieure à 500 grammes, ces monomères étant difonctionnels et/ou polyfonctionnels (la fonctionnalité désignant le nombre d'insaturations vinyliques par molécule, multipliée par deux);
— un polymère réactif ou un mélange de polymères réactifs, dont la formule chimique comporte au moins une double liaison ou un cycle. Ces polymères doivent être solubles dans le monomère ou le mélange de monomères, de façon que le composition formée soit fluide. Les proportions respectives de monomères et de polymères réactifs peuvent être très variables et sont choisies en fonction de la fluidité souhaitée;
— un catalyseur photosensible, généralement un composé carbonyle aromatique, notamment la benzoine et ses dérivés qui peuvent libérer les radicaux sous l'action des ultraviolets, et la benzophénone et ses dérivés qui peuvent soustraire des atomes d'hydrogène de composés donneurs qui deviennent alors des radicaux capables d'initier la polymérisation. La proportion de catalyseur par rapport à la masse totale de la composition est comprise entre 1% et 5%.

Le durcissement de la composition par polymérisable est rendu rapide et complet par le fait que la formule chimique de l'un au moins des monomères ou des polymères réactifs comporte un cycle thi-irane, c'est-à-dire un cycle à trois atomes: deux atomes de carbone et un atome de soufre.

La figure unique montre deux feuilles de formes adaptées 1 et 2, accolées au moyen d'une couche photopolymérisable 3 dont la composition est décrite ci-dessus. La feuille 2 est faite d'un matériau laissant passer dans une certaine proportion les ultraviolets.

Lorsque les deux feuilles sont de même nature, leur collage s'effectue selon la méthode suivante:

— une face de l'une des feuilles 1, est recouverte de la couche 3 de la composition choisie par une technique classique, par example au rouleau ou par centrifugation;
— la deuxième feuille 2 dont la forme est adaptée à la première, est appliquée sur la couche 3, de façon à ne laisser subsister aucune bulle d'air;
— la deuxième feuille est éclairée sur toute sa surface par un rayonnement ultraviolet issu, par exemple, d'un tube à vapeur de mercure à moyenne pression (0,5 à 5 atmosphères) dont l'émission maximale est centrée sur la longueur d'onde 365 mm;
— l'insolation est maintenue jusqu'au durcissement complet. Sa durée est préalablement déterminée selon la puissance de la lampe utilisée, la distance entre la lampe et la feuille insolée, l'épaisseur et le coefficient d'absorption ultraviolet de la feuille insolée, l'épaisseur de la couche photopolymérisable et sa composition, en particulier les caractéristiques du catalyseur.

Le collage de deux feuilles de nature différente s'effectue selon la même méthode à laquelle on peut ajouter une étape préalable lorsque les pouvoirs d'adhérence des deux feuilles à la couche photopolymérisable sont sont différents. Cette étape consiste à enduire l'une des feuilles (la moins adhérente) d'un agent de pontage, ou bien les deux feuilles respectivement de deux agents de pontage, ceux-ci étant compatibles à la fois avec la composition photopolymérisable et avec la feuille enduite. Ces agents de pontage sont généralement des silanes et ils permettent d'augmenter l'adhérence, donc l'efficacité du collage. Après application, un séchage est nécessaire avant d'effectuer les opérations suivantes. Sa durée est de l'ordre de 20 mn en atmosphère ambiante. L'insolation de la couche photopolymérisable par le rayonnement ultra-violet s'effectue de préférence à travers la feuille absorbant le moins ce rayonnement.

Après expérimentation, on a pu déterminer des classes de produits entrant dans la composition photo-polymérisable convenant particulièrement bien pour la mise en oeuvre du procédé décrit. Une liste de produits est donnée ci-dessous. Elle n'est pas exhaustive.

— Exemples de monomères vinyliques Des monomères appropriés sont des mono-esters, di-esters, tri-esters, tétra-esters de l'acide acrylique ou de l'acide méthacrylique, les esters d'acide acrylique étant préférables aux esters d'acide méthacrylique, car plus réactifs.

. Parmi les monomères comprenant un cycle thi-irane: l'acrylate de thioglycidyle.
. Parmi les autres monomères: les acrylates d'alkyle, les acrylates d'alcoxy-alkyle, l'acrylate de phényle, l'acrylate de glycidyle, les diacrylates d'alcanediol, les diacrylates d'alkylène glycol, le triacrylate de trimethylol propane, le triacrylate et le tétraacrylate de pentaerythritol.

— Exemples de polymères réactifs

Il s'agit également d'esters de l'acide méthacrylique, ou de préférence, de l'acide acrylique.

. Parmi les polymères comprenant un cycle thi-irane: la polyacrylate de thioglycidyle.
. Parmi les polymères ne comprenant pas de cycle thi-irane: le diacrylate de polyéthylène glycol, la diacrylate de polypropylène glycol, le polyacrylate de glycidyle éventuellement estérifié complètement ou partiellement par l'acide acrylique ou l'acide méthacrylique.

— Exemples de catalyseurs photosensibles La benzoïne ou l'un de ses dérivés, la benzophénone ou l'un de ses dérivés.

La composition décrite est prévue principalement pour le collage de feuilles de verre, ou de plastique appartenant à l'une des familles sui-vantes:

. polyacryliques, notamment le polyméth-acrylate de méthyle et ses copolymères;
. polyvinyliques, notamment le chlorure de polyvinyle, l'acétate de polyvinyle et leurs copolymères;
. polycarbonates;
. polyesters;
. polystyrènes;
. cellusosiques, notamment le triacétate de cellulose, l'acétobutyrate de cellulose.

Deux modes de réalisation du procédé sont décrits ci-après. Le premier s'applique au collage de deux feuilles de verre. Il peut être utilisé notamment pour la fabrication de pare-brise en verre feuilleté. Les feuilles de verre sont, soit planes, soit préformées à partir d'un même moule. Le deuxième s'applique au collage d'une feuille de verre et d'une feuille de plastique appartenant à l'une des familles énumérées plus haut. Il peut être utilisé pour la fabrication de blindages d'hélicoptères, par exemple, dont la solidité requise est plus grande que celle requise pour les pare-brise.

Selon le premier mode de réalisation, une plaque de verre préalablement nettoyée est enduite d'une couche de composition photo-polymérisable constituée à 49,5% de sa masse de polyacrylate de thioglycidyle (polymère à cycle thi-irane), à 7,5% de sa masse de triacrylate de penthaerythritol (monomère hexa-fonctionnel), à 38% de diacrylate d'hexanediol (monomère difonctionnel) et à 5% de benzoine dimethyl ether. Après plaquage d'une seconde lame de verre de 3 mm d'épaisseur, l'ensemble est irradié à travers cette dernière à l'aide d'un tube à vapeur de mercure moyenne pression, de 1,9 kW de puissance électrique. La distance entre la lampe et la plaque irradiée étant de 55 cm, le durcissement a été obtenu au bout de quelques secondes.

Selon le deuxième mode de réalisation, une plaque de verre d'épaisseur 3 mm est enduite de $\gamma$ - methacryl - oxypropyl - trimethoxy - silane qui est un promoteur d'adhésion verre-composition acrylique. Après séchage de 20 mn, la deuxième feuille à accoler, constituée de chlorure de polyvinyle est enduite de la même composition photopolymérisable que dans l'exemple précédent, la plaque de verre est appliquée par dessus, sa face traitée vers l'intérieur et l'irradiation est réalisée dans les mêmes conditions que celles de l'exemple précédent. Le collage des deux feuilles est obtenu au bout de 30 secondes.

Bien entendu, l'invention n'est pas limitée au collage de deux plaques transparentes. Le procédé suivant l'invention s'applique au collage de deux éléments de forme quelconque dont deux faces respectives de formes adaptées doivent être accolées. L'un des éléments peut ne pas être transparent, ou absorber fortement les rayons ultraviolets. Dans ce cas, l'insolation permettant le durcissement de la composition photopolymérisable s'effectue à travers l'élément transparent, ou a travers celui qui absorbe le moins les ultraviolets, de façon à minimiser l'énergie nécessaire.

**Revendications**

1. Procédé de collage de deux éléments dont l'un au moins est perméable aux rayonnements ultraviolets, utilisant une substance photopolymérisable ne contenant aucun solvant, déposée en couche entre les deux éléments et insolée à travers l'élément perméable par un rayonne-ment ultraviolet, cette substance photopoly-

mérisable étant formée d'un mélange d'au moins trois groupes de composants:

— un premier groupe comprenant au moins un monomère vinylique de fonctionnalité supérieure ou égale à 2 et de masse moléculaire inférieure à 500 grammes;
— un deuxième groupe comprenant au moins un polymère soluble dans le monomère, ce polymère comportant au moins une double liaison ou un cycle, et étant polymérisable sous l'effet du rayonnement ultra-violet;
— un troisième groupe comprenant au moins un catalyseur photosensible dont la proportion par rapport à la masse totale est comprise entre 1% et 5%; ce procédé de collage étant caractérisé en ce que la substance photopolymérisable comprend au moins un monomère, dans le premier groupe de composants, ou au moins un polymère, dans le second groupe de composants, possédant un cycle thi-irane.

2. Procédé selon la revendication 1, caractérisé en ce que les composants du premier groupe appartiennent à la famille comprenant les mono-esters, di-esters, tri-esters, tétra-esters de l'acide acrylique.

3. Procédé selon la revendication 2, caractérisé en ce que l'un des composants du premier groupe est l'acrylate de thioglycidyle.

4. Procédé selon la revendication 2, caractérisé en ce que l'un des éléments du premier groupe est un acrylate d'éthyle.

5. Procédé selon la revendication 2, caractérisé en ce que l'un des éléments du premier groupe est le triacrylate de pentaerythritol.

6. Procédé selon la revendication 1, caractérisé en ce que l'un des éléments du deuxième groupe est un polyacrylate de thioglycidyle.

7. Procédé selon la revendication 1, caractérisé en ce que le catalyseur photosensible appartient à la famille comprenant la benzoïne et ses dérivés.

8. Procédé selon la revendication 1, caractérisé en ce que le catalyseur photosensible appartient à la famille comprenant la benzophénone et ses dérivés.

9. Procédé selon l'une quelconque des revendications 1 à 8, caractérisé en ce que l'un des deux éléments est recouvert d'une couche d'un agent de pontage, opération suivie d'un séchage, avant le dépôt de la couche photopolymérisable.

10. Procédé selon la revendication 9, caractérisé en ce que l'agent de pontage appartient à la famille des silanes.

11. Dispositif comprenant au moins deux éléments dont l'un au moins peut laisser passer un rayonnement ultraviolet, et au moins une couche intermédiaire photopolymérisable permettant le collage entre elles de deux faces respectives des deux éléments, caractérisé en ce qu'il est obtenu par le procédé selon l'une quelconque des revendications 1 à 10.

12. Dispositif selon la revendication 11, caractérisé en ce que les deux éléments sont deux plaques de verre.

13. Dispositif selon la revendication 11, caractérisé en ce que l'un des éléments est une plaque de verre et l'autre est une feuille de plastique appartenant à l'une des familles: polyacryliques, polyvinyliques, polycarbonates, polyesters, polystyrènes, cellulosiques.

14. Dispositif selon l'une des revendications 11 à 13, caractérisé en ce qu'il comprend en outre au moins une couche d'un agent de pontage insérée entre la couche photopolymérisable et l'un des éléments.

**Patentansprüche**

1. Verfahren zum Verkleben von zwei Teilen, von denen mindestens eines für ultraviolette Strahlung durchlässig ist, bei dem eine photopolymerisierbare Substanz verwendet wird, die keinerlei Lösemittel enthält und die in Form einer Schicht zwischen den beiden Teilen aufgebracht und durch das durchlässige Teil hindurch mit ultravioletter Strahlung bestrahlt wird, und wobei die photopolymerisierbare Substanz aus einem Gemisch von mindestens drei Gruppen von Bestandteilen gebildet ist:

— einer ersten Gruppe, die mindestens ein Vinylmonomer umfaßt, das eine Funktionalität besitzt, die gleich oder höher ist als zwei, und dessen Molekulargewicht geringer ist als 500;
— einer zweiten Gruppe, die mindestens ein in dem Monomer lösliches Polymer umfaßt, wobei dieses Polymer mindestens eine Doppelbindung oder einen Ring enthält und unter der Einwirkung ultravioletter Strahlung polymerisierbar ist;
— einer dritten Gruppe, die mindestens einen lichtempfindlichen Katalysator in einer Menge von zwischen 1% und 5%, bezogen auf die Gesamtmasse, umfaßt;

wobei dieses Klebeverfahren dadurch gekennzeichnet ist, daß die photopolymerisierbare Substanz in der ersten Gruppe von Bestandteilen mindestens ein Monomer oder in der zweiten Gruppe von Bestandteilen mindestens ein Polymer umfaßt, die einen Thiiran-Ring besitzen.

2. Verfahren nach Anspruch 1, dadurch gekennzeichnet, daß die Bestandteile der ersten Gruppe zur die Mono-Ester, Di-Ester, Tri-Ester, Tetra-Ester der Acrylsäure umfassenden Familie gehören.

3. Verfahren nach Anspruch 2, dadurch gekennzeichnet, daß einer der Bestandteile der ersten Gruppe Thioglycidylacrylat ist.

4. Verfahren nach Anspruch 2, dadurch gekennzeichnet, daß einer der Bestandteile der ersten Gruppe ein Äthylacrylat ist.

5. Verfahren nach Anspruch 2, dadurch gekennzeichnet, daß einer des Bestandteile der ersten Gruppe Pentaerythrittriacrylat ist.

6. Verfahren nach Anspruch 1, dadurch gekennzeichnet, daß einer der Bestandteile der zweiten Gruppe ein Thioglycidyl-polyacrylat ist.

7. Verfahren nach Anspruch 1, dadurch gekennzeichnet, daß der lichtempfindliche Katalysator der Bezoin und dessen Derivate umfassenden Familie angehört.

8. Verfahren nach Anspruch 1, dadurch gekennzeichnet, daß der lichtempfindliche Katalysator der Benzophenon und dessen Derivate umfassenden Familie angehört.

9. Verfahren nach einem der Ansprüche 1 bis 8, dadurch gekennzeichnet, daß eines der beiden Teile mit einer Schicht aus einem Vernetzungsmittel bedeckt wird und daß anschließend getrocknet wird, bevor die photopolymerisierbare Schicht aufgebracht wird.

10. Verfahren nach Anspruch 9, dadurch gekennzeichnet, daß das Vernetzungsmittel zur Familie der Silane gehört.

11. Mindestens zwei Teile, von denen mindestens eines für ultraviolette Strahlung durchlässig ist, und mindestens eine photopolymerisierbare Zwischenschicht, die das Verkleben der beiden entsprechenden Flächen der beiden Teile miteinander gestattet, umfassende Anordnung, dadurch gekennzeichnet, daß sie nach dem Verfahren gemäß einem der Ansprüche 1 bis 10 hergestellt ist.

12. Anordnung nach Anspruch 11, dadurch gekennzeichnet, daß die beiden Teile zwei Glasplatten sind.

13. Anordnung nach Anspruch 11, dadurch gekennzeichnet, daß eines der Teile eine Glasplatte und das andere eine Platte aus Kunststoff ist, wobei letztere einer der Familien der Polyacryl-, Polyvinyl-, Polycarbonat-, Polyester-, Polystyrol- oder Cellulose-Polymeren angehört.

14. Anordnung nach einem der Ansprüche 11 bis 13, dadurch gekennzeichnet, daß sie zusätzlich mindestens eine Schicht aus einem Vernetzungsmittel umfaßt, die zwischen die photopolymerisierbare Schicht und eines der Teile eingeschoben ist.

## Claims

1. Process for the glueing of two pieces, at least one of them being permeable to ultraviolet radiation, using a photopolymerisable substance, containing substantially no solvent and being deposited in a layer between the two pieces and being irradiated through the piece permeable to a ultraviolet radiation, said photopolymerisable substance being constituted from a mixture of at least three groups of components:

— a first group comprising at least one vinylic monomer having a functionality higher than or equal to two and having a molecular mass inferior to 500 g;
— a second group comprising at least one polymer soluble in the monomer, said polymer having at least one double bond or one cycle, and being polymerisable by the effect of ultraviolet radiation;
— a third group comprising at least one photosensible catalyst, the proportion of the latter comprising between 1% and 5% with respect to the total mass;

said process for glueing being characterized in that the photopolymerisable substance comprises, in the first group of components, at least one monomer, or, in the second group of components, at least one polymer having a thiirane cycle.

2. Process according to claim 1, characterized in that the components of the first group belong to the family comprising the mono-esters, di-esters, tri-esters, tetra-esters of acrylic acid.

3. Process according to claim 2, characterized in that one of the components of the first group is thioglycidyl acrylate.

4. Process according to claim 2, characterized in that one of the members of the first group is an ethyl acrylate.

5. Process according to claim 2, characterized in that one of the members of the first group is the triacrylate of pentaerythritol.

6. Process according to claim 1, characterized in that one of the members of the second group is a polyacrylate of thioglycidol.

7. Process according to claim 1, characterized in that the photosensible catalyst belongs to the family comprising benzoin and its derivatives.

8. Process according to claim 1, characterized in that the photosensible catalyst belongs to the family comprising benzophenone and its derivatives.

9. Process according to anyone of the preceding claims characterized in that one of the two pieces is coated by a layer of a cross linking agent, which operation is followed by drying, before the photopolymerisable layer is deposited.

10. Process according to claim 9 characterized in that the cross linking agent belongs to the family of silanes.

11. Arrangement comprising at least two pieces, at least one of which being capable to let pass through ultraviolet radiation, and comprising at least one photopolymerisable intermediate layer permitting glueing of the two respective faces of the two pieces with each other, characterized in that said arrangement is obtained by the process according to any one of claims 1 to 10.

12. Arrangement according to claim 11 characterized in that the two pieces are two plates of glass.

13. Arrangement according to claim 11 characterized in that one of the pieces is a plate of glass, the other one being a sheet of plastics belonging to one of the families: polyacrylics, polyvinylics, polycarbonates, polyesters, polystyrenes, cellulosics.

14. Arrangement according to any one of claims 11 to 13 characterized in that it accessorily comprises at least one layer of a cross linking agent inserted between the photopolymerisable layer and one of the pieces.